# FASCICULE DE BREVET EUROPEEN

(11) **EP 2 647 948 B1**
(45) Date de publication et mention de la délivrance du brevet: **03.06.2015**
(21) Numéro de dépôt: 13162041.1
(22) Date de dépôt: 02.04.2013
(51) Int. Cl.: F41H 7/04, B60G 21/055

(54) **Dispositif de renforcement d'un plancher de vehicule équipé de barres de torsion et véhicule équipé d'un tel dispositif**
Verstärkungsvorrichtung für den Boden eines Fahrzeugs, das mit Torsionsstäben ausgestattet ist, und ein mit einer solchen Vorrichtung ausgestattetes Fahrzeug
Device for reinforcing the floor of a vehicle provided with torsion bars and vehicle provided with such a device

(30) Priorité: 03.04.2012 FR 1200994
(43) Date de publication de la demande: 09.10.2013
(73) Titulaire: NEXTER Systems, 42328 Roanne (FR)
(72) Inventeur: Germenot, Olivier, 18023 Bourges Cedex (FR)
(74) Mandataire: Chaillot, Geneviève

(56) Documents cités:
- EP-A2- 2 267 400
- WO-A1-03/004335
- CH-A- 401 757
- KR-A- 20050 023 898
- US-A- 3 140 880

## Description

Le domaine technique de l'invention est celui des dispositifs de renforcement des planchers de véhicules contre les effets d'explosion de mines.

L'invention vise plus particulièrement les véhicules comportant des barres de torsion disposées sous le plancher.

Il est connu d'équiper les véhicules militaires de dispositifs amortisseurs comportant des barres de torsions. Ces barres de torsion sont transversales au véhicule et sont solidaires de celui-ci par une de leurs extrémités alors que l'autre extrémité est solidaire d'un bras tiré permettant le débattement d'un élément de liaison au sol du type roue ou galet de chenille. La barre ainsi liée est sollicitée en torsion et assure le rappel du bras tiré lors des oscillations de celui ci.

Sur les véhicules équipés de barres traversant l'habitacle du véhicule, en cas d'explosion de mine sous le véhicule, le plancher est déformé et vient contraindre en flexion la barre située juste au-dessus de lui.

La barre est impactée par le plancher, elle se rompt et projette des éclats dangereux pour les occupants du véhicule.

Pour remédier à cela, il est connu de placer la barre de torsion hors de l'habitacle en la faisant passer juste sous le plancher.

Cette solution permet d'éviter les risques de projection d'éclats mais la déformation du plancher n'est plus alors limitée par la barre de torsion. Le plancher est lui-même déformé vers l'intérieur de l'habitacle et il peut venir impacter les occupants du véhicule.

Une solution est proposée par le brevet EP1081451 qui propose un module complémentaire placé sous le véhicule. Ce module comporte un second plancher sur lequel sont placés des longerons soutenant les moyens de liaison au sol et de suspension tels que les barres de torsion. Ce dispositif présente l'inconvénient d'être extrêmement lourd et volumineux, pénalisant ainsi les capacités de franchissement et de mobilité du véhicule.

Le brevet CH401757 divulgue un dispositif selon le préambule de la revendication 1, et décrit un montage de barres de torsion en dessous d'une caisse de véhicule blindé. Les barres sont solidaires par leurs extrémités de supports liés à des longerons longitudinaux disposés sous la caisse de part et d'autre du véhicule. Cependant le fond de la caisse de ce véhicule n'est absolument pas protégé vis à vis du souffle d'une mine.

La demande de brevet WO03/004335 divulgue un véhicule blindé comportant des barres de torsion placées sous le plancher du véhicule et protégées des effets d'une explosion de mine par un module de protection placé sous les barres de torsion et à distance de celles-ci.

L'invention propose de résoudre le problème de renforcement d'un plancher de véhicule blindé comprenant des barres de torsions.

Avantageusement, le dispositif selon l'invention renforce le véhicule contre les attaques de mines sans pénaliser significativement la masse et le volume du véhicule.

L'invention a pour objet un dispositif de renforcement d'un plancher d'un véhicule contre les effets d'explosion de mines, véhicule comportant au moins une barre de torsion disposée sous ledit plancher, dispositif comportant au moins un moyen de retenue destiné à être solidarisé à la face inférieure du plancher, moyen de retenue formé par une bride comportant au moins une ouverture destinée à entourer une partie inférieure d'au moins une barre de torsion, dispositif caractérisé en ce que la bride est fixée directement à la face inférieure du plancher de telle façon que la ou les barres de torsion s'opposent à une déformation du plancher vers l'intérieur de l'habitacle.

Selon une caractéristique de l'invention, la bride comporte deux ouvertures entourant chacune une partie inférieure d'une barre de torsion.

Selon une caractéristique de l'invention, la bride entoure complètement la ou les barres de torsion.

Avantageusement, la bride comporte au moins une cale d'immobilisation placée dans l'ouverture entre le plancher et une barre de torsion.

Avantageusement, il y a un jeu entre la bride et la barre de torsion, jeu permettant une rotation de la barre relativement au dispositif.

Avantageusement les moyens de retenue sont répartis régulièrement le long de chaque barre.

L'invention a aussi pour objet un véhicule comportant un plancher et au moins une barre de torsion disposée sous ledit plancher, véhicule **caractérisé en ce qu'il** comporte un dispositif de renforcement comprenant au moins un moyen de retenue solidarisable à la face inférieure du plancher, moyen de retenue formé par une bride comportant au moins une ouverture entourant une partie inférieure d'au moins une barre de torsion, bride qui est fixée directement à la face inférieure du plancher de telle façon que la ou les barres de torsion s'opposent à une déformation du plancher vers l'intérieur de l'habitacle.

L'invention sera mieux comprise à la lecture de la description suivante, description faite en référence aux dessins annexés dans lesquels:
La figure 1 représente une vue en coupe transversale d'un véhicule comportant un dispositif de renforcement selon l'invention.
La figure 2 représente une vue de détail selon la coupe longitudinale AA de la figure précédente.
La figure 3 représente une vue de détail selon la coupe longitudinale AA de la figure 1 pour un dispositif selon un second mode de réalisation.
La figure 4 représente une vue en coupe transversale d'un véhicule selon l'invention soumis à une explosion de mine.
La figure 5 représente une vue de détail selon la coupe longitudinale AA de la figure 1 pour un dispositif selon un troisième mode de réalisation.

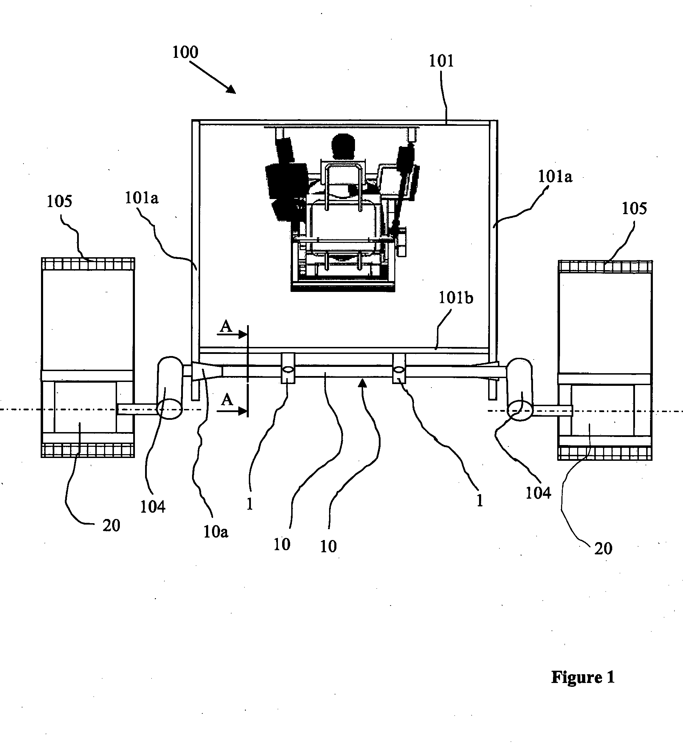

Selon la figure 1, un véhicule blindé chenillé 100 comporte une caisse 101 suspendue par des barres de torsion transversales 10 associées à des amortisseurs (non représentés). La caisse 101 comporte des flancs latéraux sensiblement verticaux 101a se prolongeant jusque sous le plancher 101b du véhicule.

Chaque barre de torsion 10 est solidaire d'un flanc 101a de la caisse 101 par une extrémité 10a et elle est solidaire d'un bras tiré 104 par son autre extrémité. Le bras tiré 104 assure la liaison avec un galet 20 qui guide la chenille 105.

Les barres de torsions 10 sont placées sous le plancher 101b. Le dessous du plancher comporte un dispositif de renforcement selon l'invention qui comporte des moyens de retenue 1 solidaires de celui ci. Deux moyens de retenue 1 par barres de torsion 10 sont régulièrement répartis le long de chaque barre et entourent la partie inférieure de chaque barre 10.

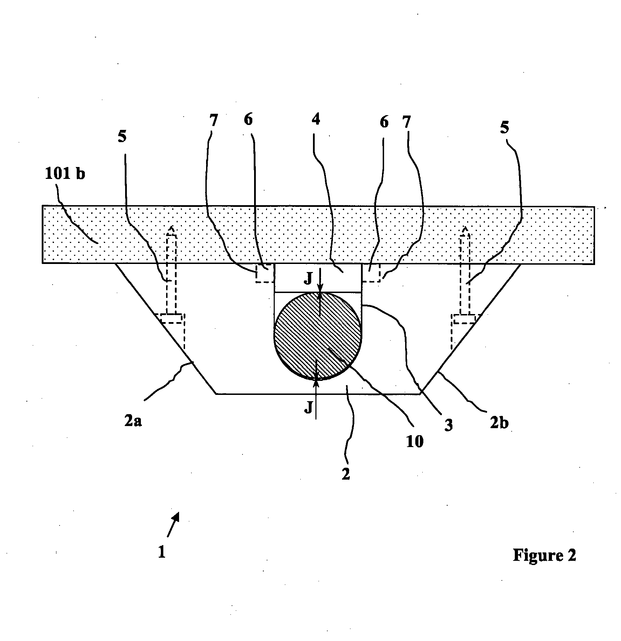

Selon un premier mode de réalisation représenté à la figure 2, chaque moyen de retenue 1 comporte une bride 2 en forme de U dont l'ouverture 3 en U est dirigée vers le plancher 101b du véhicule 100. L'ouverture 3 reçoit la partie inférieure d'une barre de torsion 10 et elle entoure la partie inférieure de celle-ci. Cette bride 2 est préférentiellement réalisée en acier de dureté inférieure à celle de la barre de torsion afin de permettre un éventuel matage de la bride 2 par la barre 10 et non l'inverse.

Une cale d'immobilisation 4 est placée dans l'ouverture 3 entre le plancher 101b et la barre de torsion 10. Un jeu J est aménagé entre la barre de torsion 10 et la bride 2 ainsi qu'entre la barre de torsion 10 et la cale d'immobilisation 4. Ce jeu sera supérieur à 0.5 mm et inférieur à 3mm pour permettre la libre rotation de la barre de torsion 10 sur elle-même tout en limitant les battements transversaux de celle ci vers le plancher.

La bride 2 est rendue directement solidaire du plancher 101b au moyen de vis 5 traversant celui ci. La cale d'immobilisation 4 est maintenue en place dans l'ouverture 3 par une correspondance de forme entre des tenons 6 de la cale 4 et des logements 7 portés par la bride 2.

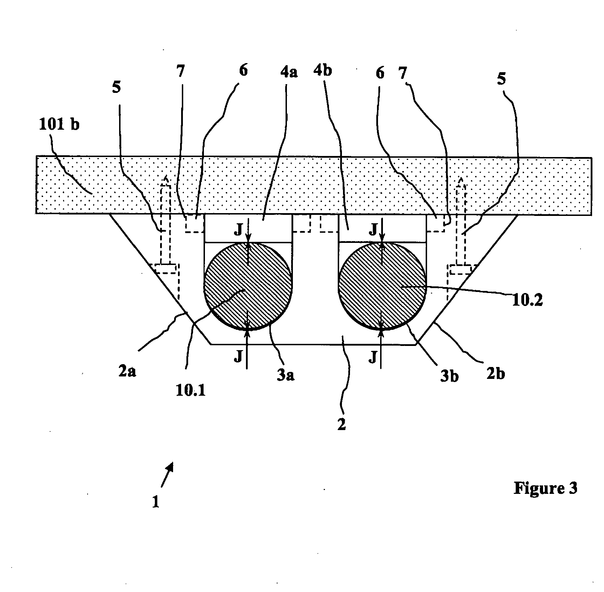

Selon un second mode de réalisation illustré à la figure 3, la bride 2 comporte deux logements 3a et 3b correspondant chacun avec une barre de torsion différente 10.1 ou 10.2. Cette bride 2 comporte également deux cales d'immobilisation 4a et 4b.

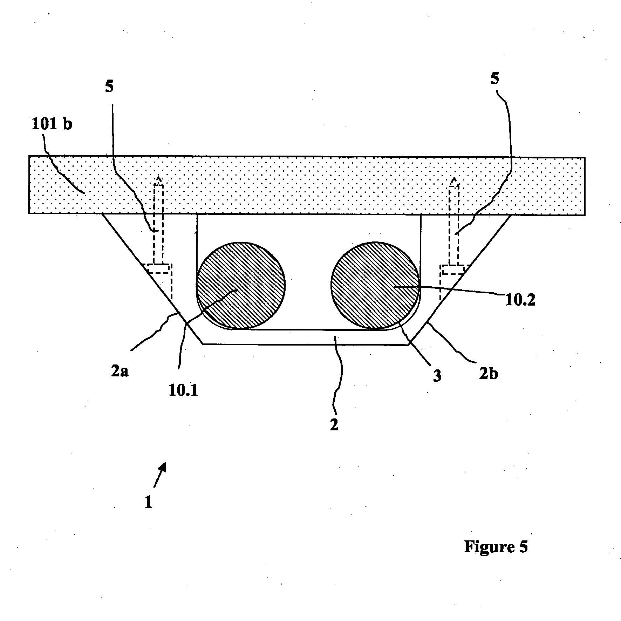

Selon un autre mode de réalisation représenté à la figure 5, le moyen de retenue 1 est formé par une bride 2 qui ne comporte pas de cale d'immobilisation et qui présente une ouverture élargie 3. Deux barres de torsions 10.1 et 10.2 sont placées dans cette ouverture 3. Ce mode de réalisation laisse une liberté de battement aux barres 10.1 et 10.2 à la fois vers le haut et horizontalement. Cette solution bien que répondant au problème posé n'est pas le mode de réalisation préféré du fait des vibrations et bruits que peut provoquer le battement de la barre 10 contre la bride 2.

Il serait également possible de définir des brides dont la ou les ouvertures 3 recevant la ou les barres de torsion sont cylindriques.

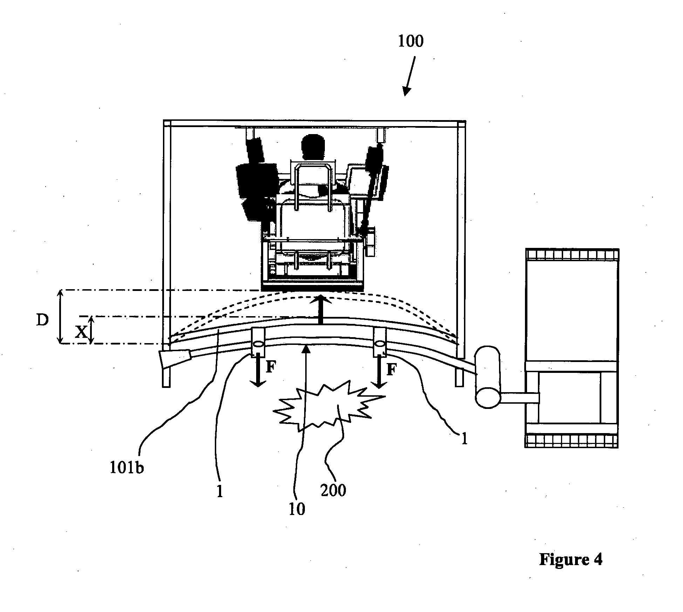

Selon la figure 4, un véhicule 100 subit une explosion de mine 200 sous son plancher 101b, explosion générant un souffle puissant faisant pression sur le plancher 101b. Les barres de torsion 10, du fait de leur géométrie offrant très peu de surface de prise au souffle, sont peu affectées par celui ci.

Le souffle induit une déformation X du plancher 101b vers l'intérieur de l'habitacle. Les barres de torsions 10 fournissent au niveau des moyens de retenue 1 un effort F s'opposant à la déformation du plancher par l'interférence de la bride 2 de chaque moyen 1 avec les barres 10. Cet effort est d'autant plus efficace que les barres ont une forte résilience. Ainsi grâce aux moyens de retenue 1, la face inférieure du plancher se trouve liée aux barres de torsion qui viennent limiter la déformation du plancher. Les moyens de retenue (ou brides 2) sont disposés à distance des extrémités des barres de torsion 10 pour que la déformation du plancher 101b soit minimisée.

On a représenté en pointillés la déformation globale qu'aurait subi le plancher 101b sans les moyens de retenue 1 selon l'invention.

Grâce à l'invention l'amplitude maximale X de la déformation du plancher est réduite et bien inférieure à l'amplitude D de la déformation d'un plancher dépourvu des moyens de retenue 1.

Le faible encombrement des moyens de retenue au regard de l'état de la technique ne grève que très marginalement la masse du véhicule et ses capacités de franchissement.

Selon les modes de réalisation représentés aux figures 2, 3 et 5, la bride 2 comporte des cotés pentus 2a et 2b pour minimiser les risques d'accrochage avec des obstacles éventuels passant sous le plancher 101b.

## Revendications

1. Dispositif de renforcement d'un plancher (101b) d'un véhicule (100) contre les effets d'explosion de mines (200), véhicule (100) comportant au moins une barre de torsion (10) disposée sous ledit plancher (101b), le dispositif comportant au moins un moyen de retenue (1) destiné à être solidarisé à la face inférieure du plancher (101b), moyen de retenue (1) formé par une bride (2) comportant au moins une ouverture (3) destinée à entourer une partie inférieure d'au moins une barre de torsion (10), dispositif **caracterisé en ce que** la bride (2) est fixée directement à la face inférieure du plancher (101b) de telle façon que la ou les barres de torsion (10) s'opposent à une déformation du plancher (101b) vers l'intérieur de l'habitacle.

2. Dispositif de renforcement selon la revendication 1, **caractérisé en ce que** la bride (2) comporte deux ouvertures (3) entourant chacune une partie inférieure d'une barre de torsion (10).

3. Dispositif de renforcement selon les revendications 1 ou 2, **caractérisé en ce que** la bride (2) entoure complètement la ou les barres de torsion (10).

4. Dispositif de renforcement selon la revendication 3, **caractérisé en ce que** la bride (2) comporte au moins une cale d'immobilisation (4) placée dans l'ouverture (3) entre le plancher (101b) et une barre de torsion (10).

5. Dispositif de renforcement selon une des revendications 1 à 4, **caractérisé en ce qu'il** y a un jeu (J) entre la bride (2) et la barre de torsion (10), jeu (J) permettant une rotation de la barre (10) relativement au dispositif.

6. Dispositif de renforcement selon une des revendications 1 à 5, **caractérisé en ce que** les moyens de retenue (1) sont répartis régulièrement le long de chaque barre (10).

7. Véhicule (100) comportant un plancher (101b) et au moins une barre de torsion (10) disposée sous ledit plancher (101b), véhicule (100) ***caractérisé en ce qu***'il comporte un dispositif de renforcement selon une des revendications précédentes, dispositif comprenant au moins un moyen de retenue (1) solidarisable à la face inférieure du plancher (101b), moyen de retenue (1) formé par une bride (2) comportant au moins une ouverture (3) entourant une partie inférieure d'au moins une barre de torsion (10), bride (2) qui est fixée directement à la face inférieure du plancher (101b) de telle façon que la ou les barres de torsion (10) s'opposent à une déformation du plancher (101b) vers l'intérieur de l'habitacle.

## Patentansprüche

1. Vorrichtung zur Verstärkung eines Bodens (101b) eines Fahrzeugs (100) gegen die Wirkungen einer Explosion von Minen (200), wobei das Fahrzeug (100) mindestens einen Torsionsstab (10) aufweist, der unter dem Boden (101b) angeordnet ist, wobei die Vorrichtung mindestens ein Haltemittel (1) aufweist, das dafür bestimmt ist, mit der unteren Fläche des Bodens (101b) fest verbunden zu werden, wobei das Haltemittel (1) durch einen Flansch (2) gebildet ist, der mindestens eine Öffnung (3) aufweist, die dafür bestimmt ist, einen unteren Teil von mindestens einem Torsionsstab (10) zu umgeben, wobei die Vorrichtung **dadurch gekennzeichnet ist, dass** der Flansch (2) unmittelbar an der unteren Fläche des Bodens (101b) derart befestigt ist, dass der oder die Torsionsstäbe (10) einer Verformung des Bodens (101b) ins Innere des Karosseriegehäuses entgegenwirkt bzw. -wirken.

2. Verstärkungsvorrichtung nach Anspruch 1, **dadurch gekennzeichnet, dass** der Flansch (2) zwei Öffnungen (3) aufweist, die jeweils einen unteren Teil eines Torsionsstabs (10) umgeben.

3. Verstärkungsvorrichtung nach Anspruch 1 oder 2, **dadurch gekennzeichnet, dass** der Flansch (2) den oder die Torsionsstäbe (10) vollständig umgibt.

4. Verstärkungsvorrichtung nach Anspruch 3, **dadurch gekennzeichnet, dass** der Flansch (2) mindestens eine Feststellunterlage (4) aufweist, die in der Öffnung (3) zwischen dem Boden (101b) und einem Torsionsstab (10) platziert ist.

5. Verstärkungsvorrichtung nach einem der Ansprüche 1 bis 4, **dadurch gekennzeichnet, dass** zwischen dem Flansch (2) und dem Torsionsstab (10) ein Zwischenraum (J) vorhanden ist, wobei der Zwischenraum (J) eine Drehung des Stabs (10) bezogen auf die Vorrichtung zulässt.

6. Verstärkungsvorrichtung nach einem der Ansprüche 1 bis 5, **dadurch gekennzeichnet, dass** die Haltemittel (1) gleichmäßig jeden Stab (10) entlang verteilt sind.

7. Fahrzeug (100), das einen Boden (101b) und mindestens einen Torsionsstab (10) aufweist, der unter dem Boden (101b) angeordnet ist, wobei das Fahrzeug (100) **dadurch gekennzeichnet ist, dass** es eine Verstärkungsvorrichtung nach einem der vorhergehenden Ansprüche aufweist, wobei die Vorrichtung mindestens ein Haltemittel (1) umfasst, das mit der unteren Fläche des Bodens (101b) fest verbindbar ist, wobei das Haltemittel (1) durch einen Flansch (2) gebildet ist, der mindestens eine Öffnung (3) aufweist, die einen unteren Teil von mindestens einem Torsionsstab (10) umgibt, wobei der Flansch (2) unmittelbar an der unteren Fläche des Bodens (101b) derart befestigt ist, dass der oder die Torsionsstäbe (10) einer Verformung des Bodens (101b) ins Innere des Karosseriegehäuses entgegenwirkt bzw. -wirken.

## Claims

1. Device for reinforcing a floor (101b) of a vehicle (100) against the explosion effects of mines (200), the vehicle (100) comprising at least one torsion bar (10) arranged under said floor (101b), the device comprising at least one retaining means (1) designed to be secured to the lower face of the floor (101b), the retaining means (1) formed by a flange (2) comprising at least one opening (3) designed to surround a lower part of at least one torsion bar (10), the device being **characterized by** the fact that the flange (2) is fixed directly to the lower face of the floor (101b) so that the one or more torsion bars (10) oppose to a distortion of the floor (101b) towards the interior of the passenger compartment.

2. Reinforcement device according to claim 1, **characterized by** the fact that the flange (2) comprises two openings (3) each surrounding a lower part of a torsion bar (10).

3. Reinforcement device according to any one of claims 1 or 2, **characterized by** the fact that the flange (2) completely surrounds the one or more torsion bars (10).

4. Reinforcement device according to claim 3, **characterized by** the fact that the flange (2) comprises at least one immobilization shim (4) arranged in the opening (3) between the floor (101b) and a torsion bar (10).

5. Reinforcement device according to any one of claims 1 to 4, **characterized by** the fact that there is a clearance (J) between the flange (2) and the torsion bar (10), the clearance (J) enabling a rotation of the bar (10) with respect to the device.

6. Reinforcement device according to any one of claims 1 to 5, **characterized by** the fact that the retaining means (1) are regularly distributed along each bar (10).

7. A vehicle (100) comprising a floor (101b) and at least one torsion bar (10) arranged under said floor (101b), the vehicle being **characterized by** the fact that it comprises a reinforcement device according to any one of the preceding claims, the device comprising at least one retaining means (1) securable to the lower face of the floor (101b), the retaining means (1) formed by a flange (2) comprising at least one opening (3) surrounding a lower part of at least one torsion bar (10), the flange (2) being fixed directly to the lower face of the floor (101b) so that the one or more torsion bars (10) oppose to a distortion of the floor (101b) towards the interior of the passenger compartment.
